# EUROPÄISCHE PATENTSCHRIFT

(11) **EP 2 829 460 B1**
(45) Veröffentlichungstag und Bekanntmachung des Hinweises auf die Patenterteilung: **16.03.2016**
(21) Anmeldenummer: 14002570.1
(22) Anmeldetag: 24.07.2014
(51) Int. Cl.: B62D 49/04

(54) **Vorbaugeräte-Anbauvorrichtung**
Attachment connection device
Dispositif de montage d'appareils frontaux

(30) Priorität: 25.07.2013 DE 102013012372
(43) Veröffentlichungstag der Anmeldung: 28.01.2015
(73) Patentinhaber: Aebi Schmidt Deutschland GmbH, 79837 St. Blasien (DE)
(72) Erfinder: Müller, Dieter, 79877 Friedenweiler (DE)
(74) Vertreter: Grättinger Möhring von Poschinger Patentanwälte Partnerschaft

(56) Entgegenhaltungen:
- EP-A2- 1 177 970
- EP-A2- 2 548 786
- DE-A1-102008 039 949

## Beschreibung

Die vorliegende Erfindung betrifft eine Vorbaugeräte-Anbauvorrichtung zur Montage an einem Trägerfahrzeug.

Auf verschiedenen Anwendungsgebieten werden Trägerfahrzeuge mit Vorbaugeräten ausgestattet. Dies gilt insbesondere für sog. Kommunalfahrzeuge, wie sie vornehmlich im Straßendienst zur Straßenunterhaltung eingesetzt werden. Im Winterdienst werden beispielsweise Front-Schneepflüge mittels derartiger Vorbaugeräte-Anbauvorrichtungen an einem Trägerfahrzeug, bei dem es sich in diesem Falle um ein Winterdienstfahrzeug handelt, angebracht. Ein wesentlicher Teil solcher Anbauvorrichtungen ist eine (fahrzeugseitige) Anbauplatte, für die, damit die jeweilige Anbauvorrichtung für verschiedene - typischerweise mit Geräteplatten ausgestattete - Vorbaugeräte universal einsetzbar ist, in gewissem Umfang Standards gelten (vgl. DIN EN 15432).

Die zentrale Funktion der hier in Rede stehenden Vorbaugeräte-Anbauvorrichtungen (vgl. z.B. DE 1020008039949 A1, EP 2700569 A2, DE 2138671 A, DE 1282046 A und DE 1505501 A) besteht darin, von dem jeweiligen Vorbaugerät herrührende Kräfte und Lasten in die Rahmenstruktur des Trägerfahrzeugs einzuleiten. Solche Kräfte können dabei insbesondere Gewichtskräfte und Betriebskräfte sein, wobei als Betriebskraft beispielsweise jene Kraft zu verstehen ist, welche durch einen im Räumbetrieb befindlichen Schneepflug auf das Trägerfahrzeug übertragen wird und die jener Kraft entspricht, die das Trägerfahrzeug auf den Schneepflug ausüben muss, um diesen im Räumeinsatz zu schieben. Solche Kräfte können unter besonderen Betriebsbedingungen (z.B. große Mengen schweren Schnees bei hohen Räumgeschwindigkeiten, Auftreffen des Schneepflugs auf Bodenunebenheiten bzw. Hindernisse) sehr große Werte annehmen. Auch solche hohen Kräfte müssen - ohne die Gefahr einer Beschädigung der Vorbaugeräte-Anbauvorrichtung und/oder des Trägerfahrzeugs - in die Rahmenstruktur des Trägerfahrzeugs eingeleitet werden, was insbesondere bei solchen Trägerfahrzeugen eine Herausforderung darstellt, deren Rahmenstruktur unter Gesichtspunkten des Fahrzeuggewichts optimiert, d.h. vergleichsweise leicht ausgeführt ist.

Die vorliegende Erfindung ist darauf gerichtet, eine insbesondere für derartige Trägerfahrzeuge besonders geeignete Vorbaugeräte-Anbauvorrichtung bereitzustellen.

Gelöst wird die vorstehend angegebene Aufgabenstellung durch die in Anspruch 1 angegebene, zur Montage an einem Trägerfahrzeug geeignete Vorbaugeräte-Anbauvorrichtung. Diese zeichnet sich somit durch eine Reihe von aufeinander abgestimmten, synergetisch funktional zusammenwirkenden charakteristischen Merkmalen aus, indem zwei mit Abstand zueinander jeweils in einem Anschlussbereich mit einem frontseitigen Rahmenabschnitt des Trägerfahrzeugs starr verbindbare Konsolen, ein sich zwischen den beiden Konsolen erstreckender, mit den Konsolen an ersten Anbindungen verbundener unterer Querträger, eine mit dem unteren Querträger zwischen den beiden Konsolen verbundene Excenterstruktur, zwei mit der Excenterstruktur an zweiten Anbindungen verbundene Seitenteile und eine mit den beiden Seitenteilen verbundene Anbauplatte vorgesehen sind, wobei (durch Verändern der Stellung der Excenterstruktur relativ zu den Konsolen) die Position der zweiten Anbindungen bezogen auf die Konsolen einstellbar und - ohne die Anbauvorrichtung zu beschädigen - definiert veränderbar ist. Die beiden Anschlussbereiche liegen dabei versetzt zu einer Referenzebene, die durch die beiden ersten Anbindungen und die beiden zweiten Anbindungen aufgespannt wird. Demnach ist, mit anderen Worten, für die erfindungsgemäße Vorbaugeräte-Anbauvorrichtung u.a. charakteristisch, dass in diese gewissermaßen eine definierte Gelenkstruktur implementiert ist, indem die Stellung der mit den Seitenteilen der Anbauvorrichtung verbundenen Excenterstruktur in Bezug auf die beiden Konsolen definiert veränderbar ist, wobei zudem die beiden Anschlussbereiche nicht in jener Ebene (Referenzebene) liegen, welche durch die beiden ersten Anbindungen und die beiden zweiten Anbindungen definiert ist, sondern vielmehr hierzu versetzt. Durch die erfindungsgemäße Kinematik der Vorbaugeräte-Anbauvorrichtung ergibt sich die Möglichkeit, dass - bei näher definierten Belastungszuständen - die Excenterstruktur ihre Stellung zu den beiden Konsolen definiert ändert. Dies wirkt sich in mehrfacher Hinsicht günstig auf die Betriebssicherheit aus. Zum einen können durch eine derartige definierte Änderung der Geometrie der Anbauvorrichtung Lastspitzen definiert abgebaut werden, so dass die Gefahr einer Überbeanspruchung der Rahmenstruktur des Trägerfahrzeugs reduziert wird. Weiterhin kann die Verlagerung der zweiten Anbindungen infolge einer solchen Veränderung der Stellung der Excenterstruktur relativ zu den Konsolen aktiv für eine solche Beeinflussung der kinematischen Verhältnisse innerhalb der Vorbaugeräte-Anbauvorrichtung genutzt werden, dass namentlich bei extremen Belastungssituationen die resultierende Kraft, wie sie von den Konsolen in die Rahmenstruktur des Trägerfahrzeugs eingeleitet wird, hinsichtlich ihrer Richtung optimal auf die spezifischen Eigenschaften der Rahmenstruktur abgestimmt ist. So ist in Anwendung der vorliegenden Erfindung namentlich möglich, durch die besagte Veränderung der Stellung der Excenterstruktur relativ zu den Konsolen bei extremen Belastungssituationen die Richtung der von den Konsolen auf die Rahmenstruktur ausgeübten Kraft so zu modifizieren, dass eine beschädigungsfreie Ableitung der Kraft innerhalb der Rahmenstruktur des Trägerfahrzeugs begünstigt wird.

Im Hinblick auf den vorstehend dargelegten Effekt ist es dabei im Hinblick auf typische frontseitige Rahmenstrukturen moderner Trägerfahrzeuge besonders günstig, wenn die beiden Anschlussbereiche unterhalb der besagten Referenzebene liegen. Denn in diesem Falle ergibt sich infolge der für die erfindungsgemäße Anbauvorrichtung charakteristische Möglichkeit der definierten inneren Formänderung der Anbauvorrichtung eine solche Modifikation der Richtung (schräg nach hinten-oben) der resultierenden Kraft, die typischen frontseitigen Rahmenstrukturen moderner Trägerfahrzeuge entgegenkommt. Ersichtlich ist bei abweichenden Rahmenstrukturen des Trägerfahrzeugs auch eine umgekehrte Gestaltung der Anbauvorrichtung dergestalt möglich, dass die beiden Anschlussbereiche oberhalb der besagten Referenzebene liegen.

Gemäß einer anderen bevorzugten Weiterbildung der vorliegenden Erfindung ist die Veränderung der Stellung der Excentrizität relativ zu den Konsolen gegen einen definierten, besonders bevorzugt einstellbaren Widerstand möglich. Insbesondere kann in diesem Sinne eine definierte, besonders bevorzugt einstellbare Losbrechkraft bzw. ein definiertes Losbrechmoment zwischen zwei relativ zueinander bewegbaren Komponenten der Anbauvorrichtung wirken.

Je nach dem individuellen Bedarf sowie den spezifischen Besonderheiten der jeweiligen Anwendung kann vorgesehen sein, dass zwischen den Konsolen und der Excenterstruktur eine Rückstelleinrichtung wirkt, welche bei nachlassender Belastung die Excenterstruktur wieder in ihre ursprüngliche Stellung relativ zu den Konsolen rückführt, oder aber dass die Excenterstruktur auch bei nachlassender Belastung ihre aufgrund der vorausgegangenen Lasteinwirkung eingenommene veränderte Stellung relativ zu den Konsolen beibehält. Insbesondere in Zusammenhang mit Schneepflügen stellt die an zweiter Stelle genannte Weiterbildung sich als besonders vorteilhaft heraus. Sie gestattet bei entsprechend robuster Ausführung der Anbauvorrichtung, dass - insbesondere am Ende des jeweiligen Räumeinsatzes - optisch kontrolliert wird, ob die Anbauvorrichtung ihre ursprüngliche geometrische Konfiguration aufweist oder aber nicht, woraus Rückschlüsse gezogen werden können darauf, ob während des Räumeinsatzes eine solche Belastungssituation vorgelegen hat, welche eine definierte Änderung der Geometrie ausgelöst hat. Eine automatische Erfassung einer solchen Formänderung (mittels geeigneter Sensoren) und sofortige Anzeige im Fahrerhaus des Trägerfahrzeugs ist möglich und ggf. mit Vorteilen verbunden, aber keineswegs notwendig. Eine solche Erfassung der Belastung bereits während des Einsatzes des mit dem Vorbaugerät ausgestatteten Trägerfahrzeugs ist im Übrigen auch bei der weiter oben bereits angesprochenen Ausgestaltung möglich, bei der zwischen den Konsolen und der Excenterstruktur eine Rückstelleinrichtung wirkt, welche bei nachlassender Belastung die Excenterstruktur wieder in ihre ursprüngliche Stellung relativ zu den Konsolen rückführt. So kann beispielsweise die tatsächliche Inanspruchnahme einer mechanischen, hydraulischen oder pneumatischen Rückstelleinrichtung (s.u.) hinsichtlich der Häufigkeit und/oder Amplitude ausgewertet werden, woraus (z.B. auch durch Integration über einen Nutzungszeitraum) Rückschlüsse auf die (Gesamt-)Belastung, welcher die Anbauvorrichtung (während des Zeitraumes) ausgesetzt war, gezogen werden können.

Für die konstruktive Ausgestaltung der Excenterstruktur kommen verschiedene Bauweisen in Betracht. Denkbar ist beispielsweise, dass die Excenterstruktur gewissermaßen in den Querträger integriert ist, namentlich über dessen (mehrfache) Kröpfung. Für übliche Anwendungsfälle ist indessen vorteilhaft, wenn die Excenterstruktur durch eine von dem Querträger begrifflich verschiedene Baugruppe realisiert wird. Im einfachsten Fall können beispielsweise zwei auf den Querträger aufgesetzte Laschen, d.h. zwei Excenterlaschen, die Excenterstruktur darstellen.

In konstruktiver Hinsicht ist besonders vorteilhaft, wenn der Querträger in den beiden Konsolen drehbar bzw. verschwenkbar gelagert ist. Der Querträger kann in diesem Falle insbesondere in Form einer - zumindest abschnittsweise - im Wesentlichen geraden Welle ausgeführt sein. Und zwei - die Excenterstruktur bildende - Laschen können dabei mit dem Querträger drehfest verbunden sein. Der Querträger stellt dabei im Übrigen seinerseits eine gewisse Nachgiebigkeit des Gesamtsystems bereit. Diese ist - bei ansonsten gleichen Bedingungen - umso größer, je weiter entfernt von den Konsolen die Laschen an dem Querträger angreifen. Durch eine belastungsabhängige elastische Verformung (Biegung) des Querträgers zwischen den beiden Konsolen durch die Einleitung von Kräften in entsprechend von den Konsolen beabstandeten Punkten können wiederum Lastspitzen gedämpft bzw. abgebaut werden. Eine gezielte Einflussnahme auf dieses Verhalten ist insbesondere dadurch möglich, dass die Position der beiden Laschen auf dem unteren Querträger individuell einstellbar ist. Ggf. können die Laschen hierzu auf dem unteren Querträger längs dessen Erstreckung verschiebbar sein, wobei eine drehfeste Anbindung der Laschen an dem Querträger beispielsweise durch korrespondierende Profilierungen (z.B. Polygonalprofil, Verzahnung, Passfeder) herbeigeführt oder zumindest unterstützt werden kann. Das vorstehend dargelegte Verhalten der von der Positionierung der Laschen abhängigen Federcharakteristik des Querträgers lässt sich im Rahmen der vorliegenden Erfindung gegebenenfalls sogar dergestalt nutzen, dass ein Verstellmechanismus vorgesehen ist, mittels dessen die Position der Laschen auf dem Querträger mittels eines Verstellantriebs veränderbar ist. In diesem Falle kann die Excenterstruktur zusätzlich zu den Laschen weiterhin beispielsweise eine mit diesen verbundene, zu dem Querträger versetzt angeordnete Zwischenwelle umfassen, an der die zweiten Anbindungen, an denen die Seitenteile mit der Excenterstruktur verbunden sind, angeordnet sind.

Ist in dem vorstehend erläuterten Sinne der untere Querträger der Anbauvorrichtung in den beiden Konsolen dreh- bzw. schwenkbar gelagert, so können, gemäß einer abermals weitergehenden bevorzugten Weiterbildung, mit ihm zwei Anschlagplatten fest verbunden sein, welche mit jeweils einer Konsole kraftschlüssig verspannt sind. Bei einer Verdrehung des Querträgers entsprechend der Veränderung der Stellung der mit diesem drehfest verbundenen Excenterstruktur (z.B. zweier Laschen) ändern auch die mit dem unteren Querträger fest verbundenen Anschlagplatten ihre Stellung relativ zu den Konsolen. Der weiter oben erläuterte Widerstand, der innerhalb der Anbauvorrichtung der besagten Änderung der Geometrie entgegengesetzt wird, lässt sich dabei auf einfache Weise und gleichwohl sehr exakt durch das Maß der kraftschlüssigen Verspannung jeweils einer Anschlagplatte mit der zugeordneten Konsole vorgeben. Das Maß der Verschwenkbarkeit der Anschlagplatten relativ zu den Konsolen ist dabei durch einen vorgegebenen Winkelbereich definiert. Innerhalb dieses Winkelbereichs ist die Änderung der Geometrie der Anbauvorrichtung in dem vorstehend dargelegten Sinne - gegen entsprechenden Widerstand - möglich; demgegenüber wirken die Anschlagplatten am Ende des besagten Winkelbereichs als Anschläge, so dass eine weitere Änderung der Geometrie nicht möglich ist.

Die vorstehend erläuterte Verspannung von Anschlagplatten relativ zu den Konsolen kann namentlich dann zum Einsatz kommen, wenn, wie weiter oben dargelegt, eine Rückstellung der Excenterstruktur bei nachlassender Belastung nicht erfolgen soll. Ist eine solche Rückstellung indessen gewünscht, so können hierzu vorgesehene Rückstelleinrichtungen (z.B. mechanische Federn oder hydraulische oder pneumatische Federeinrichtungen) gemäß bevorzugter Weiterbildung an den vorstehend erläuterten, die maximale beschädigungsfreie Formänderung begrenzenden Anschlagplatten angreifen.

Die vorstehend hinsichtlich diverser Aspekte erläuterte drehbare bzw. verschwenkbare Lagerung des unteren Querträgers in den beiden Konsolen ist, wie dargelegt, nur eine bevorzugte option, indessen keineswegs zwingend. Zur definierten Veränderung der Position der zweiten Anbindungen relativ zu den Konsolen kann beispielsweise auch der Querträger (auf Biegung und/oder Torsion) verformbar bzw. kann die Excenterstruktur definiert verformbar und/oder relativ zum Querträger lageveränderbar (z.B. verdrehbar) sein.

Bei typischen Anwendungen der vorliegenden Erfindung weist die Anbauvorrichtung ergänzend auch einen oberen Querträger auf, an dem die beiden Seitenteile an dritten Anbindungen fixiert sind. Die Fixierung der Seitenteile an dem oberen Querträger ist dabei besonders bevorzugt in einer solchen Weise nachgiebig, dass die vorstehend erläuterte Änderung der Geometrie der Anbauvorrichtung möglich ist, ohne allzu große Verspannungen innerhalb der Seitenteile auszulösen. Der obere Querträger kann, wenn die Rahmenstruktur des Trägerfahrzeugs dieses zulässt, beispielsweise an zwei Anschraubpunkten montiert werden, die bestimmungsgemäß (auch) für die Anbringung von Abschleppösen geeignet und hergerichtet sind.

Die weiter oben eingehend dargelegte Veränderbarkeit der Geometrie der Anbauvorrichtung unter bestimmten Belastungssituationen kann im übrigen bei entsprechender konstruktiver Ausgestaltung auch dazu genutzt werden, um die Anbauvorrichtung an bestimmte Toleranzen anpassen zu können, damit eine möglichst spannungsfreie Montage der Anbauvorrichtung an dem Trägerfahrzeug möglich ist. Namentlich gilt dies für eine unvermeidbare Toleranz zwischen den Anbaupunkten für einen oberen Querträger der Anbauvorrichtung relativ zu jenen frontseitigen Rahmenabschnitten des Trägerfahrzeugs, an denen die Konsolen anzubringen sind.

Im Folgenden wird die vorliegende Erfindung anhand eines in der Zeichnung veranschaulichten bevorzugten Ausführungsbeispiels näher erläutert. Dabei zeigen
Fig. 1,

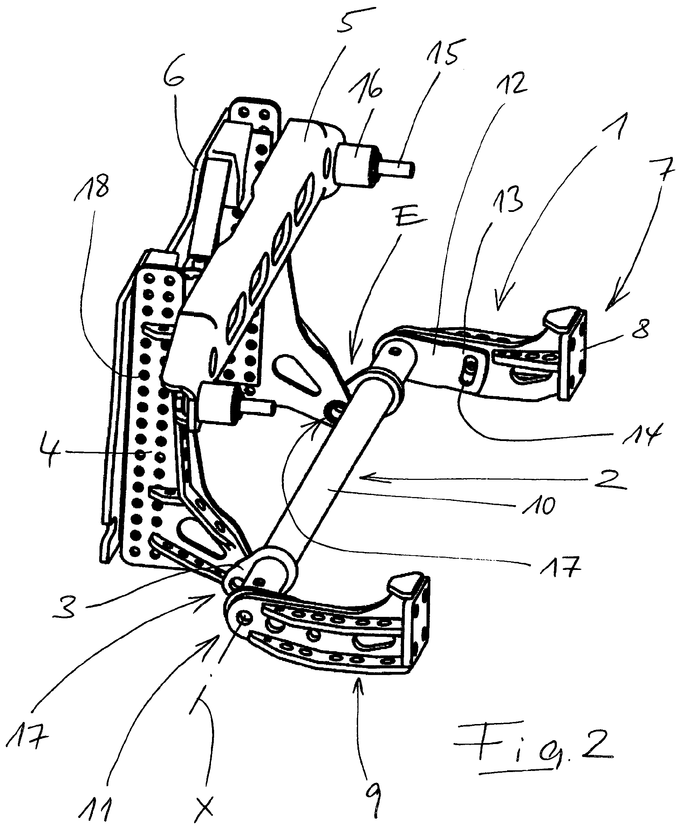

Fig. 2 und

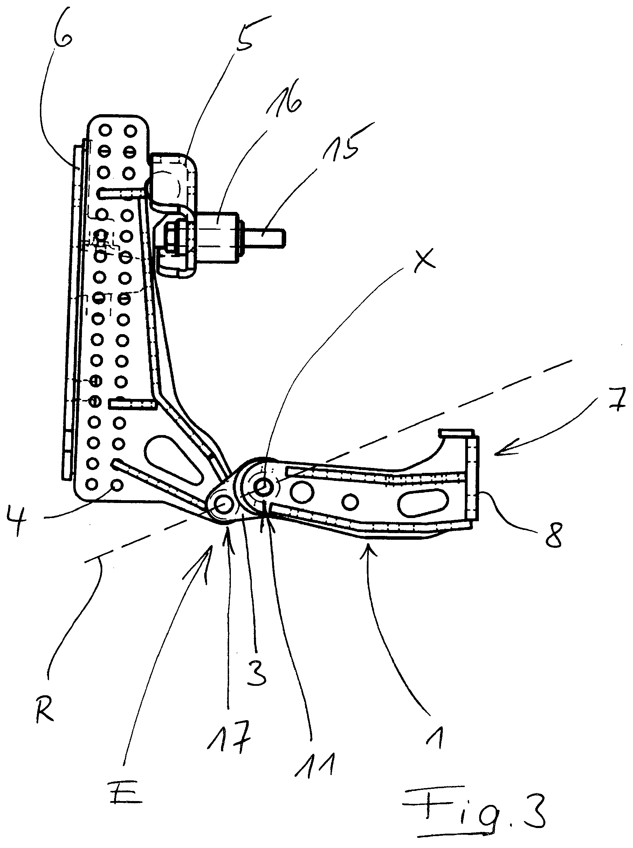

Fig. 3 eine in Umsetzung der vorliegenden Erfindung ausgeführte Vorbaugeräte-Anbauvorrichtung in drei unterschiedlichen perspektivischen Ansichten.

Die in der Zeichnung dargestellte, zur Montage an einem Trägerfahrzeug bestimmte und hergerichtete Vorbaugeräte-Anbauvorrichtung umfasst als Hauptkomponenten zwei Konsolen 1, einen unteren Querträger 2 mit zwei daran angebrachten, eine Excenterstruktur E bildenden Laschen 3, zwei Seitenteile 4, einen oberen Querträger 5 und eine Anbauplatte 6.

Die beiden Konsolen 1 sind mit Abstand zueinander jeweils in einem zugeordneten Anschlussbereich 7 mit einem frontseitigen Rahmenabschnitt des Trägerfahrzeugs - insbesondere mittels Schraubverbindungen - starr verbindbar. Sie verfügen über von der jeweiligen Anschlussplatte 8 nach vorne vorspringende, mehrfach ausgesteifte Tragstruktur 9.

Der untere Querträger 2, der in Form einer im Wesentlichen geraden Welle 10 ausgeführt ist und an dem die beiden Laschen 3 dreh- und axialfest fixiert sind, erstreckt sich zwischen den Tragstrukturen 9 der beiden Konsolen 1. Er ist mit diesen an ersten Anbindungen 11 verbunden. Und zwar ist der untere Querträger 2 in den beiden Konsolen 1, d.h. im Bereich der vorderen Enden von deren Tragstrukturen 9, um seine Achse A drehbar gelagert. Mit dem unteren Querträger 2 sind im Wesentlichen endseitig zwei Anschlagplatten 12 fest verbunden. Diese sind gemeinsam mit dem unteren Querträger 2 um dessen Achse X verschwenkbar. Sie weisen jeweils eine abgekröpfte, an einer korrespondierenden Gegenfläche der jeweils zugeordneten Tragstruktur 9 anliegende Anlagefläche 13 mit einem darin angeordneten bogensegmentförmigen Langloch 14 auf. Mittels eines das betreffende Langloch durchsetzenden, an der Tragstruktur 9 fixierten Schraubbolzens lassen sich die Anschlagplatten 12 und die jeweils zugeordnete Konsole 1 kraftschlüssig dergestalt (einstellbar) miteinander verspannen, dass die Anschlagplatten 12 relativ zu den Konsolen 1 gegen einen einstellbaren vorgegebenen Widerstand um einen vorgegebenen Winkelbereich verschwenkbar sind.

Der obere Querträger 5 ist endseitig mittels zweier Schraubbolzen 15 mit der Rahmenstruktur des Trägerfahrzeugs verbindbar, und zwar vorliegend an mit Schraubgewinden versehenen, für Anbringung von Abschleppösen geeigneten und hergerichteten Anschraubpunkten der fronseitigen Rahmenstruktur des Trägerfahrzeugs. Jeweils eine Distanzhülse 16 sorgt dabei für eine definierte Position des oberen Querträgers 5 bezogen auf die frontseitige Rahmenstruktur.

Die beiden Seitenteile 4 sind - im Bereich von zweiten Anbindungen 17 - gelenkig mit der jeweils zugeordneten Lasche 3 sowie im Bereich von (nicht dargstellten) dritten Anbindungen mit dem oberen Querträger 5 verbunden. Mit den beiden Seitenteilen 4 ist ihrerseits die Anbauplatte 6 verbunden, und zwar - über entsprechende Lochleisten 18 - höhenverstellbar. Die geometrischen Verhältnisse der Abstützung der Seitenteile 4 über die Konsolen 1 an der Rahmenstruktur des Trägerfahrzeugs sind dabei dadurch gekennzeichnet, dass die beiden Anschlussbereiche 7 der Konsolen 1 nach unten versetzt zu einer Referenzebene R liegen, die durch die beiden ersten Anbindungen 11 und die beiden zweiten Anbindungen 17 aufgespannt wird.

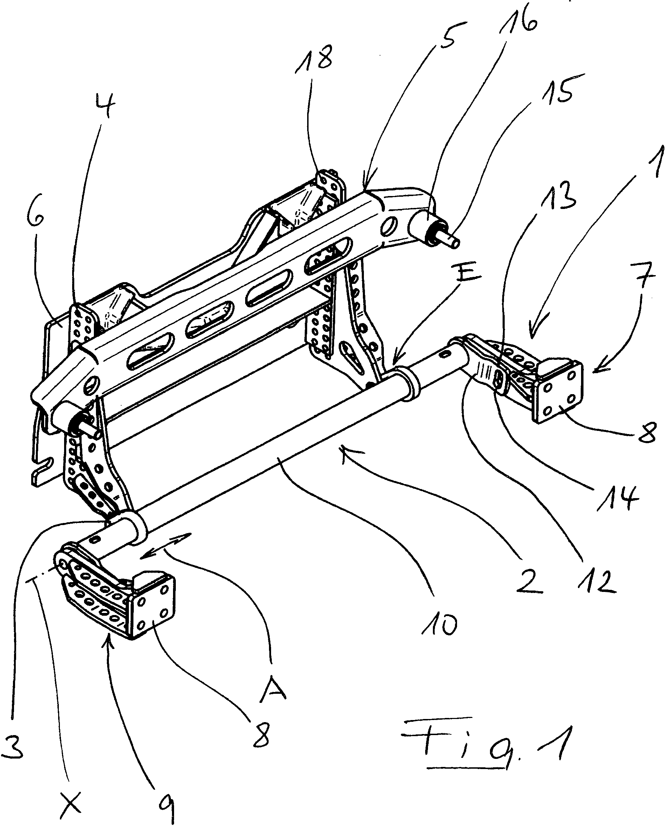

Skizziert ist in Fig. 1 die (weiter oben erläuterte) Möglichkeit, die Laschen 3 auf der Welle 10 längs deren Erstreckung verschiebbar (Pfeil A) auszuführen, wobei, wie ebenfalls bereits erläutert, in diesem Fall bevorzugt eine mit den beiden Laschen verbundene, die beiden zweiten Anbindungen definierende Zwischenwelle vorgesehen wäre.

## Patentansprüche

1. Vorbaugeräte-Anbauvorrichtung zur Montage an einem Trägerfahrzeug, umfassend zwei mit Abstand zueinander jeweils in einem Anschlussbereich (7) mit einem frontseitigen Rahmenabschnitt des Trägerfahrzeugs starr verbindbare Konsolen (1), einen sich zwischen den beiden Konsolen (1) erstreckenden, mit den Konsolen an ersten Anbindungen (11) verbunden unteren Querträger (2),
**gekennzeichnet durch**:
eine mit dem unteren Querträger (2) zwischen der beiden Konsolen (1) verbundene Excenterstruktur (E zwei mit der Excenterstruktur (E) an zweiten Anbindungen (17) verbundene Seitenteile (4) und eine mit beiden Seitenteilen verbundene Anbauplatte (6), wobei die Stellung der Excenterstruktur (E) relativ zu den Konsolen (1) einstellbar und die Position der zweiten Anbindungen (17) bezogen auf die Konsolen (1) beschädigungsfrei definiert veränderbar ist und die beiden Anschlussbereiche (7) versetzt zu einer Referenzebene (R) liegen, die **durch** die beiden ersten Anbindungen (11) und die beiden zweiten Anbindungen (17) aufgespannt wird.

2. Anbauvorrichtung nach Anspruch 1, **dadurch gekennzeichnet, dass** die beiden Anschlussbereiche (7) unterhalb der Referenzebene (R) liegen.

3. Anbauvorrichtung nach Anspruch 1 oder Anspruch 2, **dadurch gekennzeichnet, dass** die Veränderung der Stellung der Excenterstruktur (E) relativ zu den Konsolen (1) gegen einen definierten Widerstand möglich ist.

4. Anbauvorrichtung nach Anspruch 3, **dadurch gekennzeichnet, dass** der Widerstand einstellbar ist.

5. Anbauvorrichtung nach einem der Ansprüche 1 bis 4, **dadurch gekennzeichnet, dass** eine Rückstelleinrichtung für die Excenterstruktur (E) vorgesehen ist.

6. Anbauvorrichtung nach einem der Ansprüche 1 bis 5, **dadurch gekennzeichnet, dass** der untere Querträger (2) in den beiden Konsolen (1) drehbar gelagert ist.

7. Anbauvorrichtung nach einem der Ansprüche 1 bis 6, **dadurch gekennzeichnet, dass** die Excenterstruktur (E) zwei mit dem unteren Querträger (2) verbundene Laschen (3) umfasst.

8. Anbauvorrichtung nach Anspruch 7, **dadurch gekennzeichnet, dass** die Laschen (3) mit dem unteren Querträger (2) drehfest verbunden sind.

9. Anbauvorrichtung nach Anspruch 7 oder Anspruch 8, **dadurch gekennzeichnet, dass** die beiden Laschen (3) auf dem unteren Querträger (2) längs dessen Erstreckung verschiebbar sind.

10. Anbauvorrichtung nach Anspruch 9, **dadurch gekennzeichnet, dass** mit den Laschen (3) eine Zwischenwelle verbunden ist, an welcher die zweiten Anbindungspunkte (17) ausgeführt sind.

11. Anbauvorrichtung nach einem der Ansprüche 1 bis 10, **dadurch gekennzeichnet, dass** der untere Querträger (2) in Form einer zumindest abschnittsweise im Wesentlichen geraden Welle (10) ausgeführt ist.

12. Anbauvorrichtung nach einem der Ansprüche 1 bis 11, **dadurch gekennzeichnet, dass** mit dem unteren Querträger (2) zwei Anschlagplatten (12) fest verbunden sind, die mit jeweils einer Konsole (1) kraftschlüssig verspannt sind.

13. Anbauvorrichtung nach Anspruch 12, **dadurch gekennzeichnet, dass** die Anschlagplatten (12) relativ zu den Konsolen (1) um einen vorgegebenen Winkelbereich verschwenkbar sind.

14. Anbauvorrichtung nach einem der Ansprüche 1 bis 13, **dadurch gekennzeichnet, dass** ein oberer Querträger (5) vorgesehen ist, am dem die beiden Seitenteile (4) an dritten Anbindungen fixiert sind.

## Claims

1. A front-mounted-equipment attachment device for mounting on a carrier vehicle, comprising two brackets (1), which can each be connected rigidly to a front frame section of the carrier vehicle in a connection region (7) at a distance from each other, and a lower crossmember (2), which extends between the two brackets (1) and is connected to the brackets at first connections (11),
**characterised by**:
an eccentric structure (E), which is connected to the lower crossmember (2) between the two brackets (1), two side parts (4), which are connected to the eccentric structure (E) at second connections (17), and an attachment plate (6), which is connected to both side parts, wherein the position of the eccentric structure (E) relative to the brackets (1) can be adjusted, and the position of the second connections (17) in relation to the brackets (1) can be changed in a defined manner without damage, and the two connection regions (7) lie offset to a reference plane (R), which is spanned by the two first connections (11) and the two second connections (17).

2. The attachment device according to claim 1, **characterised in that** the two connection regions (7) lie below the reference plane (R).

3. The attachment device according to claim 1 or 2, **characterised in that** the change in the position of the eccentric structure (E) relative to the brackets (1) can be made against a defined resistance.

4. The attachment device according to claim 3, **characterised in that** the resistance is adjustable.

5. The attachment device according to any one of claims 1 to 4, **characterised in that** a restoring means is provided for the eccentric structure (E).

6. The attachment device according to any one of claims 1 to 5, **characterised in that** the lower crossmember (2) is mounted rotatably in the two brackets (1).

7. The attachment device according to any one of claims 1 to 6, **characterised in that** the eccentric structure (E) comprises two lugs (3), which are connected to the lower crossmember (2).

8. The attachment device according to claim 7, **characterised in that** the lugs (3) are connected to the lower crossmember (2) in a rotationally fixed manner.

9. The attachment device according to claim 7 or 8, **characterised in that** the two lugs (3) can be displaced on the lower crossmember (2) along the extent of the crossmember.

10. The attachment device according to claim 9, **characterised in that** an intermediate shaft, on which the second connection points (17) are formed, is connected to the lugs (3).

11. The attachment device according to any one of claims 1 to 10, **characterised in that** the lower crossmember (2) is in the form of a shaft (10) that is substantially straight, at least in some sections.

12. The attachment device according to any one of claims 1 to 11, **characterised in that** two stop plates (12), which are each clamped in a force-fitting manner with a bracket (1), are connected fixedly to the lower crossmember (2).

13. The attachment device according to claim 12, **characterised in that** the stop plates (12) can be pivoted by a predefined angular range relative to the brackets (1).

14. The attachment device according to any one of claims 1 to 13, **characterised in that** an upper crossmember (5) is provided, to which the two side parts (4) are fixed at third connections.

## Revendications

1. Dispositif de montage pour équipements frontaux pour le montage sur un véhicule porteur, comprenant deux consoles (1) pouvant être reliées de manière rigide à distance l'une de l'autre respectivement dans une zone de raccordement (7) à une section de châssis frontale du véhicule porteur, une traverse (2) inférieure s'étendant entre les deux consoles (1), reliée aux consoles sur les premières attaches (11),
**caractérisé par** :
une structure excentrique (E) reliée à la traverse inférieure (2) entre les deux consoles (1), deux parties latérales (4) reliées à la structure excentrique (E) aux deuxièmes attaches (17) et une plaque de montage (6) reliée aux deux parties latérales , pour lequel la position de la structure excentrique (E) peut être réglée par rapport aux consoles (1) et le positionnement des deuxièmes attaches (17) peut être modifié de manière définie sans dommage en référence aux consoles (1) et les deux zones de raccordement (7) se situent de façon décalée par rapport à un plan de référence (R), qui est fixé par les deux premières attaches (11) et les deux deuxièmes attaches (17).

2. Dispositif de montage selon la revendication 1, **caractérisé en ce que** les deux zones de raccordement (7) se situent en dessous du plan de référence (R).

3. Dispositif de montage selon la revendication 1 ou 2, **caractérisé en ce que** la modification de la position de la structure excentrique (E) envers une résistance définie est possible par rapport aux consoles (1).

4. Dispositif de montage selon la revendication 3, **caractérisé en ce que** la résistance peut être réglée.

5. Dispositif de montage selon l'une quelconque des revendications 1 à 4, **caractérisé en ce qu'**un dispositif de rappel est prévu pour la structure excentrique (E).

6. Dispositif de montage selon l'une quelconque des revendications 1 à 5, **caractérisé en ce que** la traverse inférieure (2) est logée de manière à pouvoir tourner dans les deux consoles (1).

7. Dispositif de montage selon l'une quelconque des revendications 1 à 6, **caractérisé en ce que** la structure excentrique (E) comprend deux éclisses (3) reliées à la traverse inférieure (2).

8. Dispositif de montage selon la revendication 7, **caractérisé en ce que** les éclisses (3) sont reliées de manière solidaire en rotation à la traverse inférieure (2) .

9. Dispositif de montage selon la revendication 7 ou 8, **caractérisé en ce que** les deux éclisses (3) peuvent être déplacées sur la traverse inférieure (2) le long de son extension.

10. Dispositif de montage selon la revendication 9, **caractérisé en ce qu'**un arbre intermédiaire est relié aux éclisses (3) sur lequel sont réalisés les deuxièmes points d'attache (17).

11. Dispositif de montage selon l'une quelconque des revendications 1 à 10, **caractérisé en ce que** la traverse inférieure (2) est exécutée sous la forme d'un arbre (10) pour l'essentiel droit au moins par section.

12. Dispositif de montage selon l'une quelconque des revendications 1 à 11, **caractérisé en ce que** deux plaques de butée (12) sont reliées solidement à la traverse inférieure (2), qui sont respectivement serrées à une console (1) par conjonction de force.

13. Dispositif de montage selon la revendication 12, **caractérisé en ce que** les plaques de butée (12) peuvent être pivotées par rapport aux consoles (1) autour d'une zone angulaire préalablement définie.

14. Dispositif de montage selon l'une quelconque des revendications 1 à 13, **caractérisé en ce qu'**une traverse supérieure (5) est prévue sur laquelle les deux parties latérales (4) sont fixées sur des troisièmes attaches.
